# EUROPÄISCHE PATENTANMELDUNG

(11) **EP 1 628 355 A2**
(43) Veröffentlichungstag der Anmeldung: **22.02.2006**
(21) Anmeldenummer: 05018205.4
(22) Anmeldetag: 22.08.2005
(51) Int. Cl.: H01M 8/04

(54) **Wärmeübertrager, Stromerzeuger und Heizungs- und/oder Klimaanlage**

(30) Priorität: 20.08.2004 DE 102004040664
(71) Anmelder: Behr GmbH & Co. KG, 70469 Stuttgart (DE)
(72) Erfinder: Damsohn, Herbert, Dr.-Ing., 73773 Aichwald (DE); Kaiser, Wolfram, Dr., 79848 Bonndorf (DE); Watzlawski, Markus, 73760 Ostfildern (DE)

(57) **Zusammenfassung**

Die Erfindung betrifft einen Wärmeübertrager mit Fluid- und Temperierkanälen, eine Vorrichtung zur Erzeugung elektrischen Stromes mit einem Elektrolyten, zwei Elektroden, Brennstoff-, Oxidator- und Temperierkanälen sowie eine Heizungs- und/oder Klimaanlage mit einer Luftfördereinrichtung, Luftleitmitteln und zumindest einem Wärmeübertrager, bei denen Wandungen von Temperierkanälen einen Katalysator aufweisen.

## Beschreibung

Die Erfindung betrifft einen Wärmeübertrager mit Fluid- und Temperierkanälen, eine Vorrichtung zur Erzeugung elektrischen Stromes mit einem Elektrolyten, zwei Elektroden, Brennstoff-, Oxidator- und Temperierkanälen sowie eine Heizungs- und/oder Klimaanlage mit einer Luftfördereinrichtung, Luftleitmitteln und zumindest einem Wärmeübertrager.

Die Umwandlung von chemischer in elektrische Energie mittels Stromerzeugern der eingangs genannten Art stellt eine effiziente und umweltfreundliche Methode zur Gewinnung von elektrischem Strom aus den Betriebsmedien Wasserstoff und Sauerstoff dar. Dabei finden üblicherweise zwei räumlich getrennte Elektrodenreaktionen statt, bei denen Elektronen freigesetzt bzw. gebunden werden. Ein Beispiel für zwei korrespondierende Elektrodenreaktionen in einer Polymerelektrolyt-Brennstoffzelle (PEMFC) sind folgende Reaktionen:

H₂ => 2H⁺ + 2e⁻ (Anodische Reaktion)

2H⁺ + 2e⁻ + ½ O₂ => H₂O (Kathodische Reaktion)

Bei einer Festoxid-Brennstoffzelle (SOFC) finden beispielsweise folgende Reaktionen statt:

H₂ + O²⁻ => H₂O + 2e⁻ (Anodische Reaktion I)

CO + O²⁻ => CO_{2 +}2e⁻ (Anodische Reaktion II)

O₂ + 4e⁻ => 2O²⁻ (Kathodische Reaktion)

Weitere Stromerzeugertypen weisen unter Umständen andere Reaktionen auf. Gemeinsam ist jeweils der Transport einer Spezies in elektrisch nichtneutraler Form durch einen Elektrolyten und den parallel hierzu verlaufenden Transport von Elektronen durch einen äußeren Leiter, um die Spezies nach dem Transportvorgang in einen elektrisch neutralen Zustand zurückzuversetzen.

Durch elektrische Verbindung der räumlich getrennten Reaktionszonen kann ein Teil der dabei umgesetzten Reaktionsenthalpie direkt als elektrische Energie gewonnen werden. Üblicherweise werden mehrere elektrisch in Serie geschaltete Stromerzeuger aufeinandergestapelt und ein Stromerzeugerstapel als Stromquelle verwendet.

Ein solcher Stromerzeuger besteht üblichennreise aus einer Elektrolyteinheit, welche die Reaktanden, insbesondere Wasserstoff und Sauerstoff bei einem Polyrnerelektrolyt-Stromerzeuger (PEMFC), beziehungsweise Wasserstoff/Kohlenmonoxid und Sauerstoff bei einer SOFC, voneinander trennt und eine Ionenleitfähigkeit, insbesondere eine H⁺-Protonenleitfähigkeit bei einer PEMFC oder eine O²⁻ -Leitfähigkeit bei einer SOFC, aufweist, sowie aus zwei mit Katalysatormaterial belegten Elektroden, die unter anderem zum Abgriff des von dem Stromerzeuger erzeugten elektrischen Stroms erforderlich sind.

Die Reaktanden, beispielsweise Wasserstoff und Sauerstoff, und das Reaktionsprodukt Wasser sowie gegebenenfalls ein Medium, das zur Abführung von überschüssiger Reaktionswärme dient, strömen durch Fluidkanäle, wobei die Reaktanden nicht notwendigerweise in reiner Form vorliegen müssen. Beispielsweise kann das Fluid auf der Kathodenseite Luft sein, deren Sauerstoff an der Reaktion teilnimmt. Insbesondere bei Verwendung eines wärmeabführenden Mediums wird durch eine thermische Verbindung der jeweiligen Fluidkanäle für einen Wärmeübertrag zwischen den jeweiligen Fluiden gesorgt.

Die in der Brennstoffzelle entstehende Abwärme wird häufig über ein Kühlmedium und einen separaten Kühlkreislauf abgeführt und muss an eine Umgebung abgegeben werden. Da die Temperaturdifferenz zwischen Stromerzeuger und Umgebung wesentlich geringer ist als bei einem Verbrennungsmotor vergleichbarer Leistung, ist ein Kühlungsaufwand und/oder eine Kühlergröße auch bei einem höheren Wirkungsgrad unter Umständen größer.

Die Versorgung von PEM-Stromerzeugern mit einem geeigneten Brennstoff, im folgenden Beispiel Wasserstoff, erfordert entweder das Mitführen von Wasserstoff in einem Tank, beispielsweise in kryogener oder druckgespeicherter Form, oder die Herstellung nach Maßgabe des aktuellen Bedarfs aus einem geeigneten Brennstoff, beispielsweise einem Kohlenwasserstoff, zum Beispiel von Methanol.

Für die Umsetzung von Methanol in ein wasserstoffhaltiges Gas sind verschiedene Verfahrensstufen bekannt. Im Wesentlichen wird ein Reformierungsprozeß benötigt, bei dem die Methanolketten aufgebrochen werden und als Produkt eine Mischung mit den wesentlichen Bestandteilen H₂, CO₂ und CO entsteht. In nachgeschalteten Stufen wird der CO-Gehalt sukzessive auf ein für den Stromerzeuger erforderliches Maß gesenkt und der Wasserstoffanteil weiter erhöht.

Als Reformierungsprozeß kommen bei der Umsetzung von Methanol im wesentlichen die sogenannte Dampfreformierung und die sogenannte partielle Oxidation zur Anwendung. Dabei sind der Dampfreformierungsprozeß endotherm und die partielle Oxidation exotherm, so dass durch Kombination beider Prozesse ein autothermer Prozeß erzielt werden kann, der keine aktive Kühlung benötigt, jedoch einen ungünstigeren Wirkungsgrad aufweist als ein "reiner" Dampfreformierungsprozess.

Eine Aufgabe der Erfindung ist es, ein Stromerzeugersystem zur Verfügung zu stellen, mit dem ein Kühlungsaufwand reduzierbar ist.

Grundgedanke der Erfindung ist es, eine Wandung zumindest eines Temperierkanals eines Wärmeübertragers oder eines Stromerzeugers mit einem Katalysator für eine chemische Reaktion zu versehen. Je nachdem, ob die chemische Reaktion endotherm oder exotherm ist, wird eine Ab- beziehungsweise Zufuhr von Wärme unterstützt.

Die Wandung mit dem Katalysator weist dabei vorzugsweise ein wärmeleitfähiges Material auf, so daß Wärme von dem Temperierkanal weg oder zu dem Temperierkanal hin mittels der Wandung transportierbar ist.

Die Wandung weist bevorzugt ein Katalysatormaterial auf. Bei anderen Ausführungsformen ist der Katalysator auf die Wandung aufgebracht, beispiesweise als Beschichtung. Besonders bevorzugt ist die Beschichtung mittels eines Durchspülverfahrens oder eines flächigen Auftragsverfahrens herstellbar. Insbesondere Sol-Gel- oder Aufdampfverfahren sind für das Aufbringen der Beschichtung geeignet.

Gemäß einer bevorzugten Ausführungsform ist entlang zumindest eines Brennstoff-, eines Oxidator- und/oder eines Temperierkanals ein ansteigendes Temperaturprofil anlegbar. Hierdurch wird beispielsweise bei einer Reaktion mit dem Reaktionsprodukt Wasser unter Umständen eine Unterschreitung des Taupunktes der jeweiligen Fluides vermieden. Besonders bevorzugt steigt die Temperatur entlang des Kanals während eines Betriebes des Stromerzeugers stetig an.

Gemäß einer vorteilhaften Ausführung wird ein erfindungsgemäßer Wärmeübertrager in einer Heizungs- und/oder Klimaanlage eingesetzt, wobei die Heizungs- und/oder Klimaanlage zumindest eine Luftfördereinrichtung, wie beispielsweise ein Gebläse, sowie Luftleitmittel, wie beispielsweise Kanäle, Kammern oder Ausblasdüsen aufweist.

Besonders bevorzugt weist ein Temperiermittelkreislauf der Heizungs-und/oder Klimaanlage als Wärmeübertrager einen Wärmeerzeuger und einen Kälteerzeuger auf, wobei in dem Kälteerzeuger Wärme katalytisch in chemisch potentielle Energie des Temperiermittels und in dem Wärmeerzeuger chemisch potentielle Energie des Temperiermittels katalytisch in Wärme umwandelbar ist. Durch gezielte Durchleitung von Luft durch den Kälte- und/oder den Wärmeerzeuger sowie gegebenenfalls anschließendes Mischen ist unter Umständen vorteilhaft eine gewünschte Temperatur der Luft einstellbar.

Die Erfindung wird nachfolgend anhand von Ausführungsbeispielen näher erläutert, wobei die Erfindung auch für andere Anwendungen geeignet ist.

Ein beispielhaftes Stromerzeugersytem weist einen Stromerzeugerstapel mit Separierplatten auf. Diese Separierplatten zeichnen sich dadurch aus, dass zumindest eine fluidführende Struktur zur Aufnahme der Abwärme des Stromerzeugers vorhanden ist, die mit einem für die Durchführung einer endothermen Reformierungsreaktion, beispielsweise der Wasserdampfreformierungsreaktion, geeigneten Katalysatormaterial versehen ist.

Aufgrund des endothermen Charakters der Wasserdampfreformierung wirkt die katalysatorbeschichtete fluidführende Struktur ähnlich wie ein konventionelles Kühlmittel. Durch geeignete Betriebspunktwahl des Stromerzeuger-Stapels ist auch die Durchführung eines quasi-autothermen Betriebs möglich. Für Leistungsspitzen kann der Einsatz weiterer, bevorzugt fluiddicht getrennter, konventioneller Kühlmittelverteilerstrukturen, vorgesehen werden.

Unter Umständen bewirkt das erfindungsgemäße Stromerzeugersystem beziehungsweise der erfindungsgemäße Stromerzeugerstapel einen oder mehrere der folgenden Vorteile. Einerseits ist eine Reduzierung eines Kühlaufwandes für den Stromerzeugerstapel möglich, andererseits ist ein Reformierungswirkungsgrad insbesondere durch den Einsatz der Wasserdampfreformierung steigerbar. Auch wird unter Umständen eine kompakte Bauweise ermöglicht, insbesondere durch eine Vereinigung eines Reformers mit einem Stromerzeugerstapel zu einem Bauteil.

Grundsätzlich kann sowohl der gesamte Reformierungsprozeß als auch nur ein Teil des Reformierungsprozesses in Form einer sogenannten Vorreformierung, innerhalb eines kombinierten Stromerzeugerstapel-Reformer-Bauteils erfolgen. Im Falle einer Vorreformierung kann eine nachgeschaltete Reformerstufe gegebenenfalls bei anderer Betriebstemperatur geführt und wesentlich kleiner gehalten werden als ohne erfindungsgemäßen Aufbau.

In einer besonders bevorzugten Ausführungsform wird der Stromerzeugerstapel hinsichtlich seiner Betriebstemperatur auf ein optimales Gleichgewicht der Reformierungs- und der Stromerzeugeraspekte ausgelegt.

In einer ebenfalls besonders bevorzugten Ausführung wird ein Stromerzeugerstapel mit Hochtemperatur-PEM-MEAs bei einer Betriebstemperatur von 150-300°C, bevorzugt 180-210°C, besonders bevorzugt 200-210°C, betrieben, da die Reformierungsreaktion von Methanol in diesem Temperaturbereich möglich ist.

In einer weiteren bevorzugten Ausführung ist ein Hochtemperatur-Festoxid-Stromerzeuger in einem Temperaturbereich von 600-1000°C betreibbar, wobei in einer besonders bevorzugten Ausführung ein Anteil von 1-99% des zu reformierenden Fluids in einem in eine Separierplatte integrierten, aber von der Stromerzeugeranode räumlich getrennten Fluidraum vorreformiert und der verbleibende Anteil intern in einem Brenngaskanal der Separierplatte beziehungsweise an einer Anode des Stromerzeugers reformiert wird.

## Patentansprüche

1. Wärmeübertrager, insbesondere für ein Kraftfahrzeug, mit zumindest einem Fluidkanal für ein zu temperierendes Fluid und zumindest einem Temperierkanal, **dadurch gekennzeichnet, daß** eine Wandung eines Temperierkanals einen Katalysator für eine chemische Reaktion aufweist.

2. Vorrichtung zur Erzeugung elektrischen Stromes, wie Stromerzeuger, insbesondere für ein Kraftfahrzeug, mit zumindest einem Elektrolyten und zwei Elektroden, zumindest einem Brennstoffkanal, zumindest einem Oxidatorkanal und zumindest einem Temperierkanal, **dadurch gekennzeichnet, daß** eine Wandung eines Temperierkanals einen Katalysator für eine chemische Reaktion aufweist.

3. Wärmeübertrager oder Stromerzeuger nach einem der Ansprüche 1 und 2, **dadurch gekennzeichnet, daß** die Wandung einen Katalysator für eine endotherme Reaktion aufweist.

4. Wärmeübertrager oder Stromerzeuger nach einem der Ansprüche 1 und 2, **dadurch gekennzeichnet, daß** die Wandung einen Katalysator für eine exotherme Reaktion aufweist.

5. Wärmeübertrager oder Stromerzeuger nach einem der vorhergehenden Ansprüche, **dadurch gekennzeichnet, daß** einerseits Wasser und andererseits Wasserstoff und Sauerstoff an der chemischen Reaktion beteiligbar sind.

6. Wärmeübertrager oder Stromerzeuger nach einem der vorhergehenden Ansprüche, **dadurch gekennzeichnet, daß** einerseits ein Kohlenwasserstoff, insbesondere Benzin, Diesel, Methan oder Methanol, und andererseits Wasserstoff, Kohlenmonoxid und Kohlendioxid an der chemischen Reaktion beteiligbar sind.

7. Wärmeübertrager oder Stromerzeuger nach einem der vorhergehenden Ansprüche, **dadurch gekennzeichnet, daß** der Katalysator als Beschichtung ausgebildet ist, wobei die Beschichtung insbesondere mittels eines Durchspülverfahrens oder eines flächigen Auftragsverfahrens, vorzugsweise mittels eines Sol-Gel-Verfahrens oder eines Aufdampfverfahrens herstellbar ist.

8. Stromerzeuger nach einem der vorhergehenden Ansprüche, **dadurch gekennzeichnet, daß** entlang zumindest eines Brennstoffkanals, eines Oxidatorkanals und/oder eines Temperierkanals ein insbesondere stetig ansteigendes Temperaturprofil anlegbar ist.

9. Stromerzeuger nach einem der vorhergehenden Ansprüche, **dadurch gekennzeichnet, daß** eine Betriebstemperatur zwischen 100°C und 400°C, insbesondere zwischen 150°C und 300°C, vorgesehen ist.

10. Stromerzeuger nach einem der vorhergehenden Ansprüche, **dadurch gekennzeichnet, daß** eine Betriebstemperatur zwischen 100°C und 1200°C, insbesondere zwischen 600°C und 1200°C, vorgesehen ist.

11. Stromerzeuger nach einem der vorhergehenden Ansprüche, **dadurch gekennzeichnet, daß** in dem Temperierkanal ein Brennstoff für den Brennstoffkanal erzeugbar ist, wobei der Temperierkanal und der Brennstoffkanal insbesondere miteinander kommunizieren.

12. Heizungs- und/oder Klimaanlage, insbesondere für ein Kraftfahrzeug, mit zumindest einer Luftfördereinrichtung, Luftleitmitteln und zumindest einem Wärme- oder Kälteerzeuger, **dadurch gekennzeichnet, daß** der Wärme- oder Kälteerzeuger nach einem der Ansprüche 1 bis 7 ausgebildet ist.

13. Heizungs- und/oder Klimaanlage nach Anspruch 12, **dadurch gekennzeichnet, daß** ein Wärmeerzeuger und ein Kälteerzeuger innerhalb eines Temperiermittelkreislaufs angeordnet sind, wobei in dem Kätteerzeuger Wärme katalytisch in chemisch potentielle Energie des Temperiermittels und in dem Wärmeerzeuger chemisch potentielle Energie des Temperiermittels katalytisch in Wärme umwandelbar ist.
